# EUROPÄISCHE PATENTSCHRIFT

(11) **EP 1 572 408 B1**
(45) Veröffentlichungstag und Bekanntmachung des Hinweises auf die Patenterteilung: **24.01.2007**
(21) Anmeldenummer: 03789277.5
(22) Anmeldetag: 15.12.2003
(51) Int. Cl.: B23D 15/08, B26D 1/08, B21D 43/09, B23D 33/02

(54) **SCHERE ZUM QUERTEILEN VON GROBBLECH MIT EINEM EXZENTERANTRIEB**
SHEARING MACHINE FOR TRANSVERSALLY DIVIDING A HEAVY PLATE BY MEANS OF AN ECCENTRIC DRIVE
CISAILLE POUR SCINDER TRANSVERSALEMENT DE LA TOLE DE GROS CALIBRE, COMPORTANT UN ENTRAINEMENT A EXCENTRIQUE

(30) Priorität: 20.12.2002 DE 10259903
(43) Veröffentlichungstag der Anmeldung: 14.09.2005
(73) Patentinhaber: SMS Demag Aktiengesellschaft, 40237 Düsseldorf (DE)
(72) Erfinder: HEITZE, Gerhard, 57250 Netphen (DE); BAUR, Thomas, 57271 Hilchenbach (DE)
(74) Vertreter: Klüppel, Walter
(86) Internationale Anmeldenummer: PCT/EP2003/014233
(87) Internationale Veröffentlichungsnummer: WO 2004/058439

(56) Entgegenhaltungen:
- DE-A- 1 777 014
- DE-A- 2 329 095
- DE-A- 2 457 222
- DE-A- 2 658 137
- DE-A- 3 402 567
- US-A- 1 986 685
- US-A- 3 777 608

## Beschreibung

Die Erfindung betrifft eine Schere zum Querteilen insbesondere von Grobblech aus Stahl mit einem mittels Exzenterantrieb eine Rollschnittbewegung ausführenden, in einem Messerträger gehaltenen Obermesser und einem im Scherengestell feststehend angeordneten Untermesser, wobei der obere Messerträger durch ein gelenkig gelagertes Führungselement mit einem an der Schere vorhandenen Ständer des Scherengestells beweglich verbunden ist, und der Schere eine Einrichtung zum taktweisen Vorschub vorgebbarer Längenabmessungen des Stahlblechs insbesondere in Form wenigstens eines Treibers zugeordnet ist.

Bogenmesser-Querteilscheren der o. g. Bauart und deren Arbeitsabläufe sind bekannt. Deren Funktion lässt sich wie folgt beschreiben:

Das zu schneidende Blech gelangt über einen Rollgang vor die Schere. Treiber drücken es vor dem ersten Schnitt gegen eine Ausrichteleiste. Danach läuft das Blech in die erste Schneidposition, die Treiber vor der Schere schließen. Der erste Schnitt erfolgt. Schrottstücke und Probenstreifen werden abgeführt und fallweise zerkleinert.

Für weitere Schnitte steuern Längenmessrollen den Treiber entsprechend der programmierten Blechlänge. Nach dem Schneiden werden die Bleche über eine Scherenwippe auf einen Anschlussrollgang befördert.

Die Querteilschere ist mit bogenförmigem Obermesser und geradem Untermesser ausgerüstet. Sie arbeitet nach dem Rollschnittprinzip: Das Obermesser führt eine Rollbewegung aus. Aufgrund dieser abrollenden Bewegung des Bogenmessers entsteht nur ein geringer Überschnitt gegenüber dem geraden Untermesser; die Bleche bleiben dadurch praktisch frei von Querbögen und werden von den Messern schnell zum Weitertransport freigegeben. Darüber hinaus ist nur ein kurzer Hub der Scherenwippe erforderlich. Die abgeschnittenen Bleche fallen aus geringer Höhe, wodurch der Lärm erheblich verringert werden kann.

Das Obermesser wird durch Gleichstrommotoren über Getriebe, Kurbelwellen und Druckstelzen angetrieben. Der Getriebekasten ist horizontal teilbar und erlaubt daher einen leichten Zugang für Wartungszwecke.

Um saubere Schnittkanten am Blech zu erhalten, wird der Spalt zwischen Ober- und Untermesser entsprechend der Dicke und Qualität des zu schneidenden Materials stufenlos eingestellt. Eine Blechhalteeinrichtung gewährleistet in Zusammenarbeit mit Niederhaltern der Schere rechtwinklige Blechformate.

Zumindest an der Einlaufseite der Schere sind auf Blechbreite einstellbare Treib-rollen angeordnet. Sie bewirken in Verbindung mit den Längenmesssystemen einen exakten Transport der Bleche in Übereinstimmung mit den vorgewählten Schneidlängenwert eines Schneidprogrammes.

Die Anordnung von Treibrollen an einstellbaren Schwenklagem gewährleistet richtungsstabiles Transportieren und damit parallele Schnittkanten am quer geteilten Blech. Wenn die Treibrollen am Blechende geöffnet werden, unterstützen Andrückrollen den Blechtransport.

Für automatisch ablaufende Schneidprogramme mit häufig wechselnden Fertiglängen - auch innerhalb eines Walzbleches - werden vorzugsweise Längenmessrollen eingesetzt. Sie steuern die Treibrollen beim Transport des Bleches.

Die deutsche Patentschrift 23 29 095 beschreibt eine Längsteilschere für Walzenbleche, insbesondere für dicke Bleche, mit einem eine Rollschnittbewegung ausführenden bogenförmigen Obermesser und einem ortsfesten, geraden Untermesser, wobei das Obermesser gegenüber dem Untermesser entsprechend den unterschiedlichen Blechdicken auf verschiedene Eindringtiefe voreinstellbar ist. Vor dem Eintauchende des Obermessers am Obermesserträger ist ein Wälzkörper gelagert, der geringfügig über die Schneidkante des Obermessers vorsteht. Der Wälzkörper ist bevorzugt eine Rolle, die um eine quer zur Schneidkante des Obermessers gerichtete Achse frei drehbar gelagert ist. Am vorderen Ende des Untermessers, etwa unterhalb der am Obermesserträger befindlichen Rollen, ist eine Tragrolle gelagert, die geringfügig über die Schneidkante des Untermessers vorsteht. Damit wird erreicht, dass während des Betriebes ein Aufeinandergleiten des bewegten Bleches und des Obermessers vermieden wird.

Das Dokument DE-AS-17 77 014 beschreibt eine Schere zum Besäumen oder Teilen von Blechen. Sie besitzt ein feststehendes Untermesser und ein auf einem Messerträger angeordnetes, eine bogenförmige Schneidkante aufweisendes Obermesser, das zu einer Rollschnittbewegung antreibbar ist und dabei durch eine ständerfeste Führung gegen Verschieben in Messerlängsrichtung gesichert ist. Die Führung wird durch senkrechte, quer zur Schneidebene verlaufende Führungsflächen gebildet, die einen am Obermesserträger in Messermitte drehbar gelagerten Gleitstein zwischen sich aufnehmen, dessen verlängerte Drehachse durch die Obermesserschneidkante verläuft.

Das Dokument DE 24 57 222 A1 offenbart eine Abschervorrichtung mit einem feststehenden Messer und einem mit diesem zusammen wirkenden, beweglichen Messer, welches mittels einer Exzentermechanik gegenüber dem feststehenden Messer zur Ausführung einer schwingenden bzw. rollenden Schneidbewegung veranlasst wird. Eine fluid-betriebene Antriebseinrichtung, ist operativ so angekoppelt, dass das bewegliche Messer bei seiner Schneidbewegung angetrieben und hin- und herbewegt wird.

Das Dokument DE-AS-26 58 137 beschreibt eine Wälzschere mit einem an einem Gegengestell starr befestigten Gegenmesser und einem nach unten gebogenen, an einem oberen Messerhalter befestigten Messer, das mit einer dem Messer eine schwingende Bewegung erteilenden Exzenteranordnung verbunden ist, wobei der obere Messerhalter durch eine an ihren Enden jeweils gelenkig gelagerte Führungsstange mit einem der Anfangsseite des Schnittes zugeordneten Scherengestell verbunden ist. Der Kern dieser Wälzschere ist, dass derjenige Punkt am oberen Messerhalter, der im Wesentlichen dem Längsmittelpunkt des oberen Messers entspricht, über die Führungsstange derart mit dem Scherengestell verbunden ist, dass er sich nur entlang eines Kreisbogens mit konstantem Radius bewegen kann, und dass sich die Führungsstange im Wesentlichen parallel zum unteren Messer erstreckt. Bevorzugt ist die Führungsstange mit dem Messerhalter mit Hilfe eines sphärischen Lagers verbunden.

Das US-Patent 1,986,685 offenbart eine Rollschere für Metallplatten mit um einen Drehpunkt taumelnd bewegbaren Obermesser mit Exzenterantrieb und einem geraden Untermesser, so wie mit Niederhaltern.

Aus dem Dokument DE 34 02 567 A1 ist eine Vorrichtung zum Schneiden von Betonstahlstäben bekannt mit Zuführförderer, Abführförderer sowie Trennschere in einem gemeinsamen Maschinengestellt. Die Trennschere weist ein Obermesser und unterhalb der Zuführebene ein feststehendes Gegenmesser auf. Es sind Treiber vorhanden zum taktweisen Vorschub der zu schneidenden Betonstahlstäbe. Breite Grobbleche sollen mit dieser Trennschere nicht geschnitten werden.

Ausgehend vom vorgenannten Stand der Technik liegt der Erfindung die besondere Aufgabe zugrunde, eine Schere der im Oberbegriff von Anspruch 1 genannten Bauart systematisch weiter zu verbessern, um sie den gestiegenen Leistungen von Walzstraßen anzupassen und so auszulegen, dass sie die wachsenden Ansprüche an Maßhaltigkeit, Ebenheit und Oberflächenbeschaffenheit der Bleche sowie Wartungsfreundlichkeit und Verfügbarkeit der Anlagen erfüllen.

Die Lösung der Aufgabe wurde mit der Erfindung dadurch erreicht, dass die Schere zwischen seitlichen Ständern eines mit jeweils einer oberen und einer unteren Traverse geschlossen ausgebildeten Scherengestells angeordnet ist, in dessen oberen Bereich die Exzenterantriebe des Obermessers, und in dessen unteren Bereich ein Untermessertisch zwischen den Ständern fest eingespannt, sowie Lagerungen und Antriebsorgane der unteren Treibrollen angeordnet sind und dass dem Untermessertisch ein unterer Getriebekasten zugeordnet ist, der zusätzlich zu den Lagerungen der unteren Treibrollen eine Mittenlagerung besitzt.

Das vorteilhafte Konstruktionsmerkmal ist die besondere Steifigkeit der Querteilschere infolge des geschlossenen Ständers und die Einspannung des Untermessertisches zwischen die Scherenständer. Gleichzeitig wird der untere Getriebekasten und die Frontplatte zwischen die Scherenständer eingespannt. Die Schnittkräfte und die Treiber Kräfte werden also direkt in die Scherenständer eingeleitet, womit ein direkter Kraftfluß stattfindet.

Eine Ausgestaltung der Scherenkonstruktion sieht vor, dass sie eine Anordnung der Treiber aufweist, bei welcher jeweils ein Treiber mit einer oberen Treiber-Druckrolle vor dem Obermesser, und ein Treiber mit einer oberen Treiberdruckrolle hinter dem Obermesser vorhanden ist.

Eine weitere Ausgestaltung der Konstruktion der Schere sieht vor, dass der Treiber-Druckrolle eine Führungsschiene mit einem Verstellantrieb zugeordnet ist, die eine Verstellung der Rollenlagerung zwecks Anpassung an die Dimension einer Teilblechbreite ermöglicht.

Weiterhin sieht eine verbesserte Ausgestaltung der Konstruktion der Schere vor, dass der vor den Scherenmessem befindliche Einlauftreiber auf kürzeste Distanz zu diesen angeordnet ist, derart, dass sich ein möglichst langer Transport mit dem Einlauftreiber ergibt. Dabei wird der Einlauftreiber näher an die Scherenmesser herangeführt, beispielsweise unter Verkürzung der bisher üblichen Abstände von 1.650 mm auf 800 mm.

Mit der Erfindung wird ferner vorgeschlagen, dass der hintere Treiber derart ausgebildet und angeordnet ist, dass er die Teilbleche beim Teilschnitt zusätzlich zu den Niederhaltern zur Vermeidung einer Winkelverschiebung festhält.

Es ist weiter vorgesehen, dass die Druckrolle des Einlauftreibers an einer Hebelkonstruktion angeordnet ist, die über einen Hydraulikzylinder eine Transport-Anpresskraft auf die untere Treibrolle überträgt.

Mit Vorteil weist der hintere Treiber eine angetriebene untere Treibrolle auf, die auf einer Konsole gelagert ist und zugleich die Aufgabe einer Rollgangsrolle übernimmt.

Eine besonders sichere Führung der Scherenmesser wird dadurch erreicht, dass der Untermessertisch und die untere Frontplatte zwischen den Scherenständern eingespannt sind, derart, dass die Schnittkräfte zur Ausbildung eines direkten Kraftflusses unmittelbar in die Scherenständer eingeleitet werden.

Die hintere Druckrolle ist an einem Schlitten mit Rollen geführt und wird über einen E-Getriebemotor mit Ritzel und Zahnstange auf die jeweilige Teilblechbreite verstellt. Die hintere Druckrolle wird wie die vordere Druckrolle, über einen Hydraulikzylinder auf das Teilblech aufgesetzt. Während des Blechtransportes ist der Schlitten mit Druckrolle hydraulisch geklemmt. Die neuen Konstruktionsmerkmale verringern erheblich die Kosten insbesondere der Treiber und verbessern die Qualität des Produktes.

Nachfolgend wird die erfindungsgemäße Querteilschere anhand von Zeichnungen näher erläutert.
Es zeigen:
- Figur 1: eine Vorderansicht der Querteilschere mit abgenommener Frontplatte und Sicht auf die Obermesser-Antriebsorgane;
- Figur 2: eine Vorderansicht der Querteilschere;
- Figur 3: eine Ansicht des Scherenständers von der Seite;
- Figur 4: in Seitenansicht eine Disposition von Treiberrollen vor der Querteilschere;
- Figur 5: in Frontansicht und teilweise im Schnitt ein Paar Treiberrollen vor den Scheren;
- Figur 6u.: im Schnitt eine Treiberrolle einschließlich ihrer Lagerung und

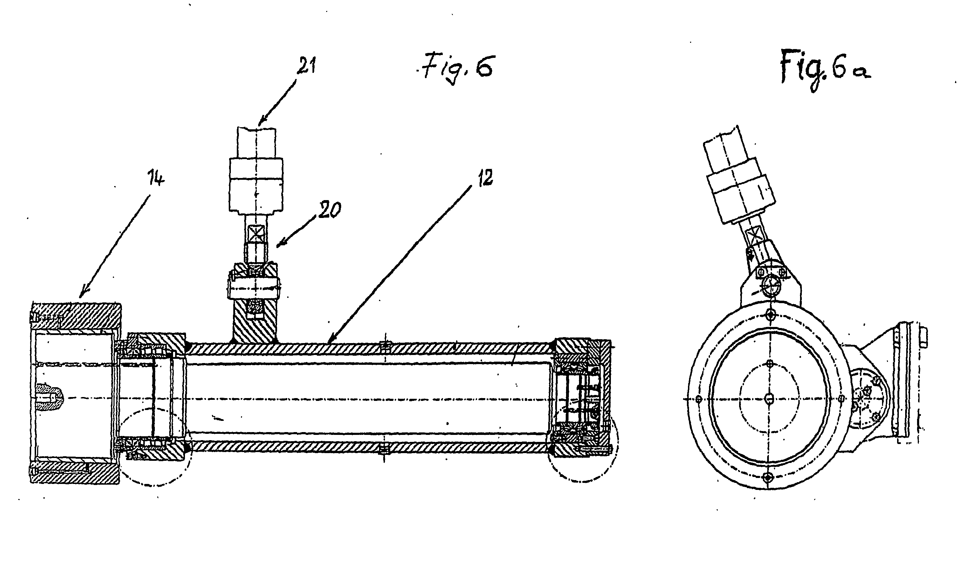

- Figur 6a: Druckbeaufschlagung durch einen Hydraulikzylinder sowie in Ansicht in Richtung ihrer Achse;

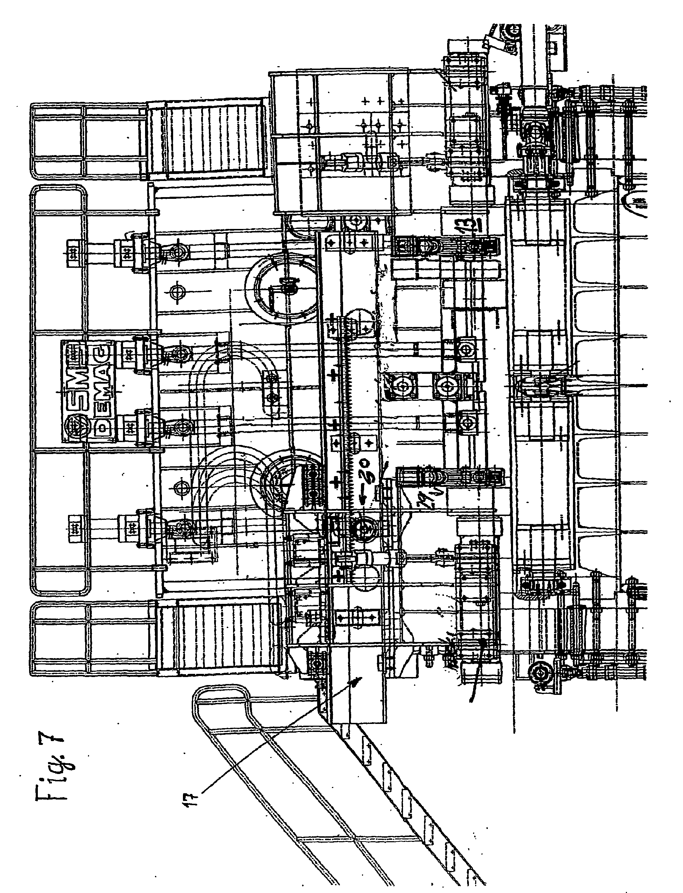

- Figur 7: Verstellantrieb und verstellbare Treiberrolle zur Anpassung an Blechbreiten.

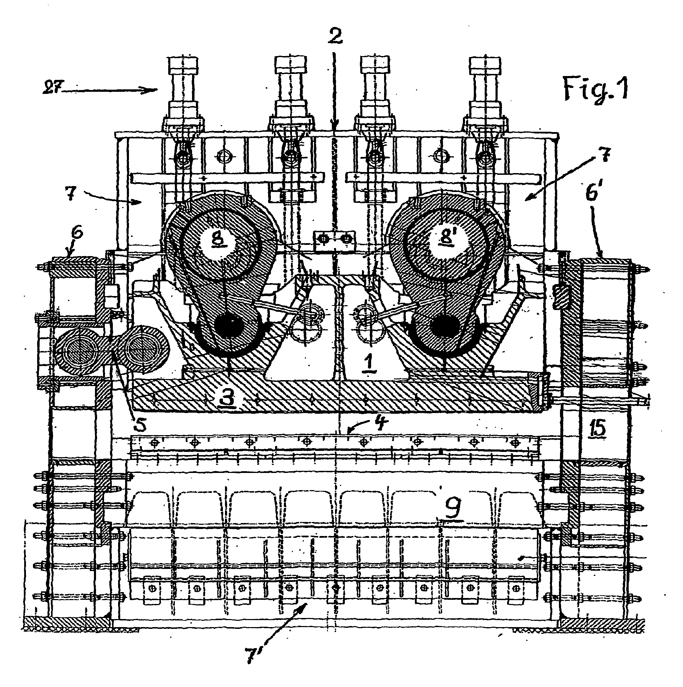

Figur 1 zeigt eine Frontansicht der Querteilschere bei abgenommener Frontplatte. Die dadurch freigelegte Innenseite der Schere zeigt den Messerträger 1 mit dem Obermesser 3. Als Antriebsorgane dienen die Exzenterantriebe 8, deren mittels Rotation erzeugte Schwingbewegung über nach unten gerichtete Stößel auf den Messerträger 1 übertragen werden und diesen dabei in eine Rollschnittbewegung versetzen.

Der Messerträger 1 ist mit Hilfe des Führungselementes 5 beweglich mit dem feststehenden Ständer 6 des Scherengestells 2 verbunden und verhindert somit ein Ausweichen des Messerträgers 1 in seitlicher Richtung.

Weiterhin ist erkennbar, dass das Untermesser 4 zwischen die Ständer 6, 6' fest eingespannt ist. Dadurch bekommt die gesamte Konstruktion des Scherengestelles 2 in jegliche Richtung sichere Stabilität.

Die Stabilität des Scherengestelles 2 wird noch weiter dadurch verstärkt, dass im unteren Bereich des Gestelles der Untermessertisch 9 ebenfalls beidseitig mit den Ständern 6, 6' fest verschraubt ist.

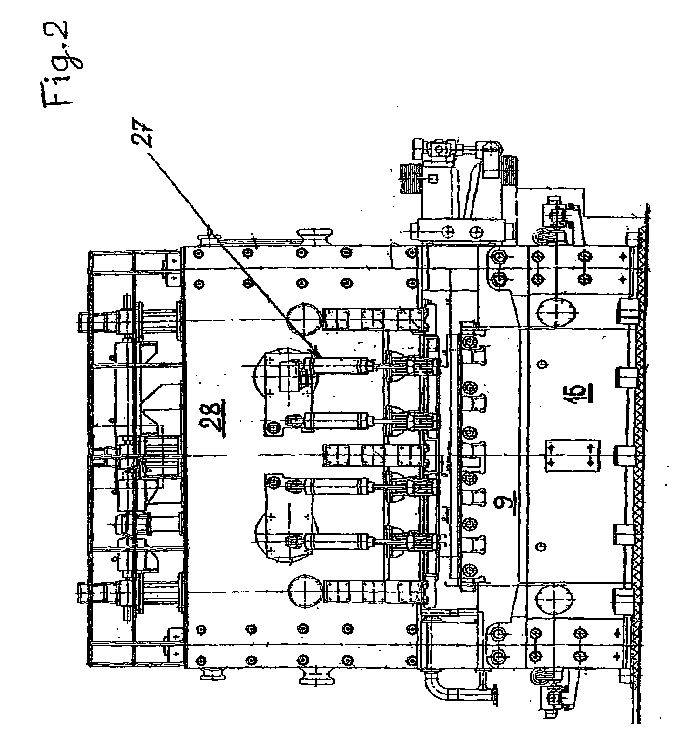

Figur 2 zeigt in Vorderansicht bei auf das Gestell 2 aufmontierter Frontplatte 28 eine Reihe von Niederhaltern 27 mit zur Krafteinleitung vorhandenen Hydraulikzylindern. Die vordere Frontplatte 28 ist, wie gezeigt, mittels Schraubverbindungen auf die Ständer 6 aufgebracht, so dass die Frontplatte zwecks Wartung des innen liegenden Getriebeteiles unkompliziert und schnell abgebaut werden kann.

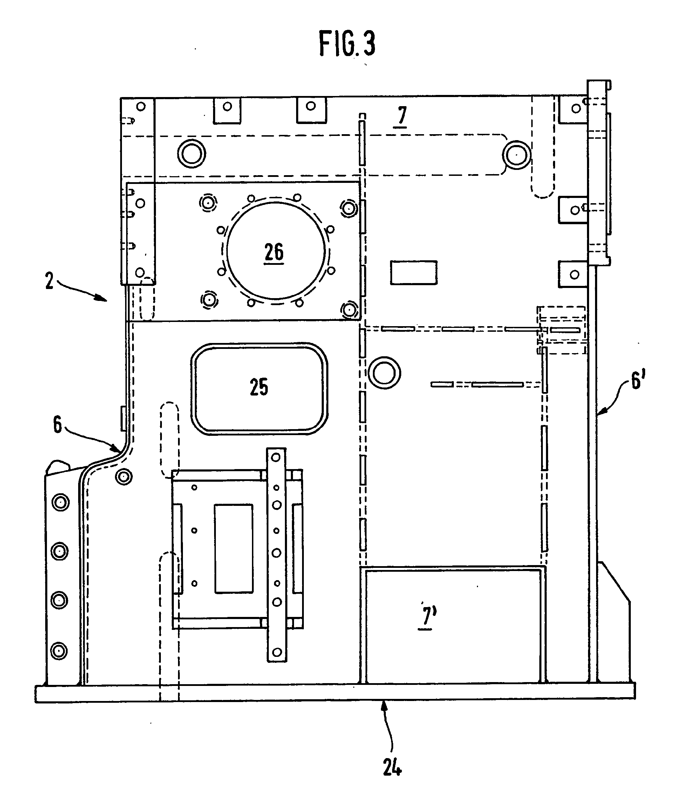

Figur 3 zeigt in Seitenansicht das Gestell 2 der Schere mit einem Fenster 25, durch welches ein Austausch der Scherenmesser zur Seite hin problemlos erfolgen kann. Mit 26 ist eine Öffnung für die Exzenter-Lagerung des Obermesser-Getriebes vorgesehen, welches mit den Exzenterantrieben 8 ausgerüstet ist. Mit der Ziffer 24 ist eine untere Frontplatte bezeichnet, die als festes Fundament für das Gehäuse der Schere vorgesehen ist.

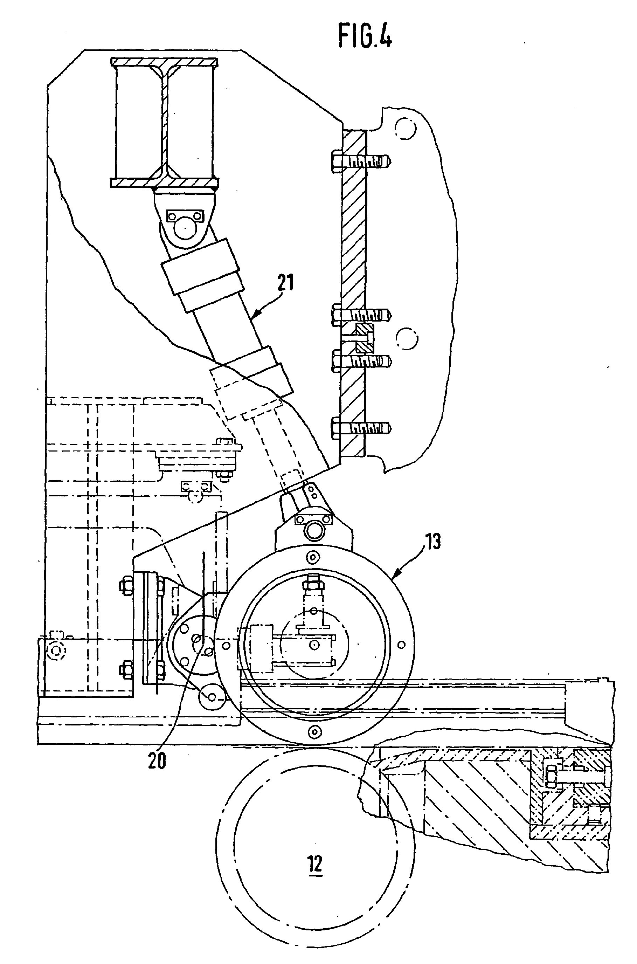

In der Figur 4 ist eine Anordnung der Treiber gezeigt, bei welcher jeweils ein Treiber mit einer oberen Treiber-Druckrolle 13 vorzugsweise vor dem Obermesser 3, und ein angetriebener Treiber 12 zusammenwirkbar angeordnet sind.

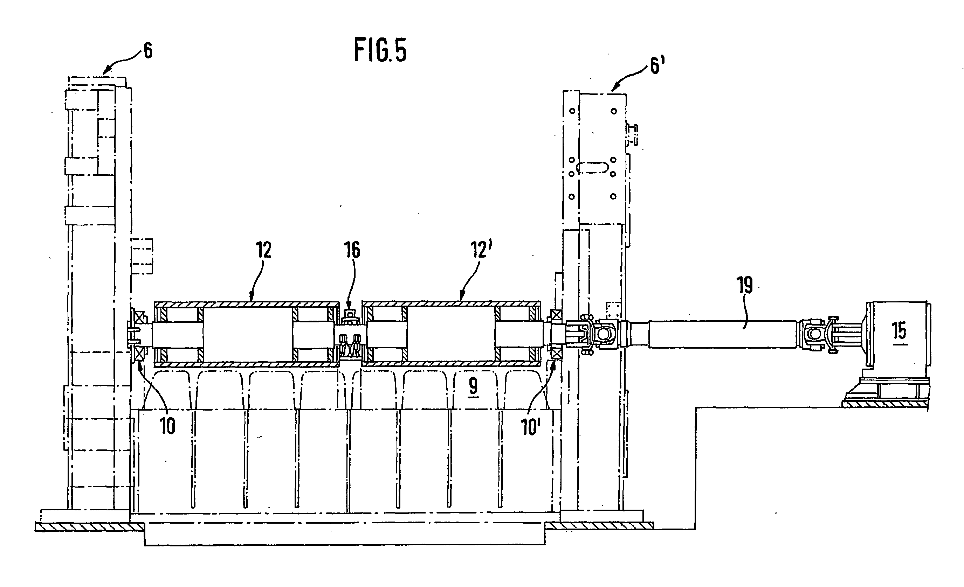

Figur 5 zeigt eine Anordnung angetriebener unterer Treibrollen 12, 12' mit einer Mittellagerung 16 oberhalb des Untermessertisches 9 mit einem unteren Getriebekasten zum Antrieb der beiden Treibrollen 12, 12'.

Figur 6 zeigt eine hintere Druckrolle 14 an einer Hebelkonstruktion 20, die über einen Hydraulikzylinder 21 eine Transport-Anpresskraft auf die untere Treibrolle überträgt.

Und schließlich zeigt die Figur 7, dass der verstellbaren Treiber-Druckrolle 29 eine Führungsschiene 17 mit einem Verstellantrieb 30 zugeordnet ist, die eine Verstellung der Rollenlagerung im Abstand von der festseitigen Treiber-Druckrolle 13 zwecks Anpassung an die Dimension einer Teilblechbreite ermöglicht.

Wie zuvor erwähnt, sind der Untermessertisch 9 und die untere Frontplatte 24 zwischen die Scherenständer 6, 6' derart eingespannt , dass die Schnittkräfte zur Ausbildung eines direkten Kraftflusses unmittelbar in die Scherenständer 6, 6' eingeleitet werden.

### Liste der Bezugszeichen

- 1.: Messerträger
- 2.: Scherengestell
- 3.: Obermesser
- 4.: Untermesser
- 5.: Führungselement
- 6.: Ständer
- 7.: Obere Traverse / untere Traverse
- 8.: Exzenterantriebe
- 9.: Untermessertisch
- 10.: Lagerung
- 10'.: Lagerung
- 11.: Antriebsorgane
- 12.: untere Treibrollen
- 13.: vordere Treiber-Druckrolle
- 14.: hintere Treiber-Druckrolle
- 15.: untere Getriebekasten
- 16.: Mittenlagerung
- 17.: Führungsschiene

- 19.: Antriebswelle
- 20.: Hebelkonstruktion
- 21.: Hydraulikzylinder
- 22.: Konsole

- 24.: untere Frontplatte
- 25.: Fenster
- 26.: Öffnung für Exzenter-Lagerung

- 27.: Niederhalter
- 28.: vordere Frontplatte
- 29.: verstellbare Treiber-Druckrolle
- 30.: Verstellantrieb

## Patentansprüche

1. Schere zum Querteilen insbesondere von Grobblech aus Stahl mit einem mittels Exzenterantrieb (8) eine Rolischnittbewegung ausführenden, in einem Messerträger (1) gehaltenen Obermesser (3) und einem im Scherengestell (2) feststehend angeordneten Untermesser (4), wobei der obere Messerträger (1) durch ein gelenkig gelagertes Führungselement (5) mit einem an der Schere vorhandenen Ständer (6) des Scherengestells (2) beweglich verbunden ist, und der Schere eine Einrichtung zum taktweisen Vorschub vorgebbarer Längenabmessungen des Stahlblechs insbesondere in Form wenigstens eines Treibers zugeordnet ist,
**dadurch gekennzeichnet,**
**dass** die Schere zwischen seitlichen Ständern (6, 6') eines mit jeweils einer oberen (7) und einer unteren Traverse (7') geschlossen ausgebildeten Scherengestells (2) angeordnet ist, in dessen oberem Bereich die Exzenterantriebe (8, 8') des Obermessers (3), und in dessen unterem Bereich ein Untermessertisch (9) zwischen den Ständern (6. 6') fest eingespannt, sowie Lagerungen (10, 10') und Antriebsorgane (11) unterer Treiberrollen (12, 12') angeordnet sind und dass dem Untermessertisch (9) ein unterer Getriebekasten (15) zugeordnet ist, der zusätzlich zu den Lagerungen (10, 10') der unteren Treiberrollen (12, 12') eine Mittenlagerung (16) besitzt.

2. Schere nach Anspruch 1,
**dadurch gekennzeichnet,**
jeweils ein Treiber mit einer oberen Treiber-Druckrolle (13) vor dem Obermesser (3), und ein Treiber mit einer oberen Treiber-Druckrolle (14) hinter dem Obermesser (3) vorhanden ist. (Fig. 4, Fig. 6)

3. Schere nach Anspruch 1 oder 2,
**dadurch gekennzeichnet,**
**dass** der Treiber-Druckrolle (29) eine Führungsschiene (17) mit einem Verstellantrieb zugeordnet ist, die eine Verstellung der Rollenlagerung zwecks Anpassung an die Dimension einer Teilblechbreite ermöglicht.

4. Schere nach einem oder mehreren der Ansprüche 1 bis 3,
**dadurch gekennzeichnet,**
**dass** der vor den Messern (3, 4) befindliche Einlauftreiber (13) auf kürzeste Distanz zu diesen angeordnet ist, derart, dass sich ein möglichst langer Transport mit dem Einlauftreiber (13) ergibt.

5. Schere nach einem oder mehreren der Ansprüche 1 bis 4,
**dadurch gekennzeichnet,**
**dass** der hintere Treiber derart ausgebildet und angeordnet ist, dass er die Teilbleche beim Teilschnitt zusätzlich zu den Niederhaltern zur Vermeidung einer Winkelverschiebung festhält.

6. Schere nach einem oder mehreren der Ansprüche 1 bis 5,
**dadurch gekennzeichnet,**
**dass** die Druckrolle (13) des Einlauftreibers an einer Hebelkonstruktion (20) angeordnet ist, die über einen Hydraulikzylinder (21) eine Transport-Anpresskraft auf die untere Treibrolle überträgt.

7. Schere nach einem oder mehreren der Ansprüche 1 bis 6,
**dadurch gekennzeichnet,**
**dass** der hintere Treiber eine angetriebene untere Treibrolle (14) aufweist, die an einer Konsole (22) gelagert ist und zugleich die Aufgabe einer Rollgangsrolle übernimmt.

8. Schere nach einem oder mehreren der Ansprüche 1 bis 7,
**dadurch gekennzeichnet,**
**dass** der Untermessertisch (9) und die untere Frontplatte (24) zwischen den Scherenständern (6, 6') eingespannt sind, derart, dass die Schnittkräfte zur Ausbildung eines direkten Kraftflusses unmittelbar in die Scherenständer (6, 6') eingeleitet werden.

9. Schere nach einem oder mehreren der Ansprüche 1 bis 8,
**dadurch gekennzeichnet,**
**dass** eine verstellbare Druckrolle (29) mit einem Verstellantrieb (30) verbunden ist, vorzugsweise an einem Schlitten mit Rollen geführt ist und über einen E-Getriebemotor mit Ritzel und Zahnstange auf die jeweilige Teilbtechbreite verstellbar ist, dass die Druckrolle (29) über einen Hydraulikzylinder auf das Teilblech aufsetzbar ist und während des Blechtransports der Schlitten mit Druckrolle hydraulisch geklemmt ist.

## Claims

1. Cutter for cross-cutting of, in particular, heavy plate of steel, with an upper knife (3), which executes a rolling cutting motion by means of an eccentric drive (8) and which is mounted in a knife carrier (1), and a lower knife (4) which is arranged to be stationary in the cutter frame (2), wherein the upper knife carrier (1) is movably connected by way of a pivotably mounted guide element (5) with a housing (6), which is present at the cutter, of the cutter frame (2), and equipment for cyclic advance of predeterminable length dimensions of the steel plate, particularly in the form of at least one driver, is associated with the cutter, **characterised in that** the cutter is arranged between lateral housings (6, 6') of a cutter frame (2), which is of closed construction respectively with an upper cross member (2) and a lower cross member (7') and in the upper region of which the eccentric drives (8, 8') of the upper knife (3) and in the lower region of which a lower knife table (9) are fixedly clamped in place between the housings (6, 6'), as well as bearings (10, 10') and drive elements (11) of lower drive rollers (12, 12') are arranged and that a lower gearbox (15), which additionally to the bearings (10, 10') of the lower drive rollers (12, 12') has a centre bearing (16), is associated with the lower knife table (9).

2. Cutter according to claim 1, **characterised in that** a driver with an upper driver pressure roller (13) is present in front of the upper knife (3) and a driver with an upper driver pressure roller (14) is present behind the upper knife (3) (Fig. 4, Fig. 6).

3. Cutter according to claim 1 or 2, **characterised in that** a guide rail (17) with an adjusting drive, which enables adjustment of the roller bearing for the purpose of adaptation to the dimension of a part plate width, is associated with the driver pressure roller (29).

4. Cutter according to one or more of claims 1 to 3, **characterised in that** the inlet driver (13) disposed in front of the knives (3, 4) is arranged at the shortest distance from these in such a manner that a longest possible transport by the inlet driver (13) results.

5. Cutter according to one or more of claims 1 to 4, **characterised in that** the rear driver is constructed and arranged in such a manner that it fixes the part plates during the part cut additionally to holding down for avoidance of angular displacement.

6. Cutter according to one or more of claims 1 to 5, **characterised in that** the pressure roller (13) of the inlet driver is arranged at a lever construction (20) which transmits a transport pressing force to the lower driver roller by way of a hydraulic cylinder (21).

7. Cutter according to one or more of claims 1 to 6, **characterised in that** the rear driver has a driven lower drive roller (14) which is mounted at a bracket (22) and at the same time takes over the task of a roller path roller.

8. Cutter according to one or more of claims 1 to 7, **characterised in that** the lower knife table (9) and the lower front plate (24) are clamped in place between the cutter housings (6, 6') in such a manner that the cutting forces are introduced directly into the cutter housings (6, 6') for formation of a direct force flow.

9. Cutter according to one or more of claims 1 to 8, **characterised in that** an adjustable pressure roller (29) is connected with an adjusting drive (30), preferably is guided at a carriage with rollers, and is adjustable to the respective part plate width by way of an electric geared motor with pinion and rack and that the pressure roller (29) can be placed on the part plate by way of a hydraulic cylinder and the carriage is hydraulically clamped by the pressure roller during the plate transport.

## Revendications

1. Cisaille pour scinder transversalement en particulier de la tôle de gros calibre en acier, comportant un couteau supérieur (3) retenu dans un porte-couteau (1) et exécutant un mouvement de coupe roulant au moyen d'un entraînement à excentrique (8), et comportant un couteau inférieur (4) agencé de façon stationnaire dans un bâti de cisaille (2), le porte-couteau supérieur (1) étant relié à un montant (6) du bâti de cisaille (2) présent sur la cisaille, et ceci avec faculté de déplacement par un élément de guidage (5) monté en articulation, un dispositif en particulier sous la forme d'au moins un entraîneur étant associé à la cisaille, qui est destiné à l'avance cadencée de la tôle d'acier sur des dimensions en longueur prédéterminées,
**caractérisée en ce que**
la cisaille est agencée entre des montants latéraux (6, 6') d'un bâti de cisaille (2) réalisé de façon fermée par une traverse supérieure (7) et par une traverse inférieure (7'), bâti dont la zone supérieure comprend les entraînements à excentrique (8, 8') du couteau supérieur (3), et dont une zone inférieure comprend une table à couteau inférieur (9) fermement serrée entre les montants (6, 6'), ainsi que des montures (10, 10') et des organes d'entraînement (11) de rouleaux entraîneurs inférieurs (12, 12'), et **en ce qu'**un caisson inférieur à mécanisme de transmission (15) est associé à la table à couteau inférieur (9) et possède, en supplément aux montures (10, 10') des rouleaux entraîneurs inférieurs (12, 12'), une monture médiane (16).

2. Cisaille selon la revendication 1,
**caractérisée en ce qu'**un entraîneur respectif comportant un rouleau de pression (13) se présente devant le couteau supérieur (3) et un entraîneur comportant un rouleau de pression supérieur (14) se présente derrière le couteau supérieur (3) (figure 4, figure 6).

3. Cisaille selon la revendication 1 ou 2,
**caractérisée en ce qu'**au rouleau de pression entraîneur (29) est associé un rail de guidage (17) pourvu d'un entraînement de déplacement, qui permet un déplacement de la monture de rouleau en vue d'une adaptation à la dimension d'une largeur de tôle partielle.

4. Cisaille selon l'une ou plusieurs des revendications 1 à 3,
**caractérisée en ce que** l'entraîneur d'entrée (13) situé en avant des couteaux (3, 4) est agencé à la plus petite distance de ceux-ci, de telle sorte qu'il résulte un transport aussi long que possible avec l'entraîneur d'entrée (13).

5. Cisaille selon l'une ou plusieurs des revendications 1 à 4,
**caractérisée en ce que** l'entraîneur arrière est réalisé et agencé de telle sorte qu'il retient les tôles partielles lors de la coupe partielle, en supplément aux éléments de maintien vers le bas, en vue d'éviter un déport angulaire.

6. Cisaille selon l'une ou plusieurs des revendications 1 à 5,
**caractérisée en ce que** le rouleau de pression (13) de l'entraîneur d'entrée est agencé sur une construction à levier (20) qui transmet une force de pressage de transport au rouleau entraîneur inférieur via un vérin hydraulique (21).

7. Cisaille selon l'une ou plusieurs des revendications 1 à 6,
**caractérisée en ce que** l'entraîneur arrière comprend un rouleau entraîneur inférieur (14) entraîné qui est monté sur une console (22) et qui remplit simultanément la fonction d'un rouleau d'un train de rouleaux.

8. Cisaille selon l'une ou plusieurs des revendications 1 à 7,
**caractérisée en ce que**
la table à couteau inférieur (9) et la plaque frontale inférieure (24) sont serrées entre les montants de cisaille (6, 6') de telle sorte que les forces de coupe sont appliquées directement dans les montants de cisaille (6, 6') pour réaliser un flux de force direct.

9. Cisaille selon l'une ou plusieurs des revendications 1 à 8,
**caractérisée en ce qu'**un rouleau de pression réglable (29) est relié à un entraînement de réglage (30) et est de préférence guidé sur un chariot pourvu de rouleaux en étant réglable à la largeur de tôle partielle respective au moyen d'un moto-réducteur électrique à pignon et à crémaillère, **en ce que** le rouleau de pression (29) est susceptible d'être posé sur la tôle partielle au moyen d'un vérin hydraulique, et **en ce que** pendant le transport de la tôle le chariot à rouleau de pression est coincé par voie hydraulique.
